# FASCICULE DE BREVET EUROPEEN

(11) **EP 0 662 563 B1**
(45) Date de publication et mention de la délivrance du brevet: **23.02.2000**
(21) Numéro de dépôt: 94402699.6
(22) Date de dépôt: 25.11.1994
(51) Int. Cl.: E21B 33/138, E21B 21/00, C09K 7/02

(54) **Procédé utilisant le gellane comme réducteur de filtrat pour les fluides de forage à base d'eau**
Verfahren unter Verwendung von Gellan zur Filtratreduzierung von wässrigen Bohrflüssigkeiten
Method using gellan for reducing the filtrate of aqueous drilling fluids

(30) Priorité: 24.12.1993 FR 9315719
(43) Date de publication de la demande: 12.07.1995
(73) Titulaire: INSTITUT FRANCAIS DU PETROLE, 92500 Rueil Malmaison (FR)
(72) Inventeur: Dreveton, Eric, F-69630 Chanopost (FR); Lecourtier, Jacqueline, F-92500 Rueil Malmaison (FR); Ballerini, Daniel, F-78100 Saint Germain en Laye (FR); Choplin, Lionel, F-54000 Nancy (FR)

(56) Documents cités:
- EP-A- 0 012 552
- EP-A- 0 058 917
- EP-A- 0 453 366
- EP-A- 0 561 504
- EP-A- 0 658 612
- GB-A- 1 416 013
- GB-A- 2 058 106
- GB-A- 2 271 572
- US-A- 3 933 788
- US-A- 4 981 520
- US-A- 5 238 065

## Description

La présente invention concerne le domaine des opérations de forage menées dans le but d'exploiter des gisements souterrains contenant des hydrocarbures. Plus particulièrement, l'invention décrit un procédé pour contrôler les pertes par filtration d'un fluide en circulation dans un puits foré à travers des formations géologiques.

La technique conventionnelle de forage comporte la circulation d'un fluide injecté vers le fond du puits par le canal de la garniture de forage, le fluide remontant vers la surface dans l'annulaire défini par les parois du puits et l'extérieur de la garniture de forage. Au cours de la remontée et pendant le forage, une certaine quantité de fluide de forage pénètre dans les formations géologiques poreuses ou fracturées. Cette quantité perdue de fluide est appelée perte par filtration ou filtrat. Il est généralement souhaitable de limiter la quantité de filtrat car celle-ci représente une consommation coûteuse en produits de base, des opérations de contrôle et de conditionnements supplémentaires dans l'installation de traitement des boues, et également des risques de déstabilisation des parois du puits ou de colmatage des zones géologiques productrices ou potentiellement productrices.

On connaît dans la profession de nombreux produits réducteurs de filtrat pour les fluides à base d'eau, qu'ils soient fluides de forage, fluide de complétion ou fluide de "work over". On peut citer par exemple, l'utilisation de colloïdes organiques tels amidon, carboxyméthylcellulose (CMC) ou cellulose polyanionique (PAC).

On connaît par les documents US-A-4326052, US-A-4326053, US-A-4377636 et US-A-4385123 le polysaccharide S-60 appelé gellane dont l'utilisation en solution aqueuse comme agent épaississant, gélifiant et stabilisant est connue dans le domaine alimentaire, des peintures ou des adhésifs.

On connaît le document US-A-5 238 065 qui décrit un procédé et une composition pour retirer le cake déposé sur les parois d'un puits. Il est décrit que des polymères du type polysaccharide, par exemple du gellane, peuvent être présents dans le cake.

On connaît aussi le document EP-A-658612 A1 concernant des fluides à base d'eau contenant des polysaccharides. La stabilité thermique des solutions de polymère est augmentée par l'adjonction notamment, d'oxyde de magnésium. La gomme gellane est citée parmi les polysaccharides.

Il n'est pas question dans ces documents de gellane natif, ni de son utilisation en tant que réduction de filtrat.

Ainsi la présente invention concerne l'utilisation de gellane natif dans un fluide à base d'eau en circulation dans un puits foré à travers au moins une formation géologique ayant une certaine perméabilité, en tant que réducteur de filtrat.

Le fluide peut comporter entre 0,5 et 10 grammes par litre de gellane et préférentiellement moins de 5 g/litre.

La viscosité dudit fluide peut être principalement contrôlée par l'adjonction d'au moins un polymère, ledit polymère pouvant être choisi dans le groupe constitué par le xanthane, le scléroglucane, le wellane, la cellulose hydroxy éthylée (HEC), la CMC, la gomme de Guar et les polyacrylamides.

Le gellane est un polysaccharide exocellulaire produit par la bactérie Auromonas elodea (ATCC 31461) précédemment classifiée comme Pseudomonas elodea. Cette bactérie a été isolée de tissus de plantes (elodea) collectés en Pennsylvanie. La bactérie a été caractérisée par Kang et Veeder et décrite dans le brevet US-4326053. Le gellane est produit par fermentation aérobie. La description du produit et d'un procédé d'obtention sont divulgués dans les documents US-A-4326052, US-A-4326053, US-A-4377636 et US-A-4385123.

Trois principales "qualités" de gellane sont aisément accessibles et une seule est actuellement commercialisée. Les différences entre ces produits sont dues à la nature du traitement post-fermentaire effectué. Le gellane natif est obtenu directement à partir du moût de fermentation après chauffage de celui-ci à 95°C pendant 5 minutes et précipitation à l'alcool isopropylique. Le second produit dit désestérifié est identique au précédent, mais lorsque le moût de fermentation est à 95°C, le pH est amené à 10 avec de la soude ou de la potasse et maintenu à cette valeur durant 10 minutes. La solution est ensuite neutralisée par
de l'acide sulfurique, puis le produit est précipité à l'alcool. Ce traitement provoque la rupture des liaisons esters des substituants du polysaccharide natif qui contient un acétate et un glycérate. Le dernier produit, commercialisé sous le nom de GELRITE ou KELCOGEL par la société MERK & Co (USA), est le gellane désestérifié et clarifié. Alors que le gellane non clarifié est composé de près de 50% de matériel insoluble principalement constitué de cellules entières et de débris cellulaires, ces impuretés sont dans ce cas éliminées du produit désestérifié par une centrifugation ou une filtration à 70°C.

Les trois "qualités" de gellane possèdent des propriétés gélifiantes différentes. Le produit désestérifié et clarifié et le produit seulement désestérifié ne présente pas de différences notoires. Par contre, de nombreuses différences existent entre le gellane natif et le gellane désestérifié. Le gellane natif forme un gel élastique et mou alors que le gellane désestérifié forme un gel fragile et ferme. De plus, le gellane natif comportant des chaînes latérales est plus facile à solubiliser que le gellane désestérifié. Finalement, le gellane natif ne présente pas d'hystérésis par rapport à la température, c'est-à-dire que les propriétés du gel sont identiques, à même température, lors de sa prise ou de sa fusion. Cela est décrit par Moorhouse et al. (1981) dans "PS-60 : a new gel-forming polysaccharide, in solution properties of polysaccharides", David A. Brant (ed), American Chemical Society Symposium séries n°150, Washington, DC., 111-123.

Un mélange de gellane natif et de gellane désestérifié permet d'obtenir toute une gamme de gels ayant des caractéristiques intermédiaires entre celles des gels obtenus à partir de ces deux produits, d'après Sanderson et al.(1988), Gellan gum in combination with other hydrocolloids, in "Gums and stabilisers for the food industry 4", Phillips, G.O.; Williams, P.A. and Wedlock, D.J. (ed), IRL Press, Oxford Washington D.C. USA, 301-308.

Le comportement d'une solution de polysaccharide est directement fonction de l'état conformationnel des chaînes de polymère.

Les solutions de gellane natif présentent, à partir d'une certaine concentration en polysaccharide, les caractéristiques d'un réseau "pseudogel" transitoire résultant d'associations faibles entre les doubles hélices formées par les brins de polysaccharide. Cette hypothèse suggère la présence d'agrégats de bâtonnets, ou de microgels.

Les caractéristiques rhéologiques d'une solution de gellane sont donc fortement dépendantes de la température de la solution et des concentrations en sel et en polysaccharide.

Selon la présente invention, la demanderesse a constaté que le gellane a de bonnes caractéristiques comme réducteur de filtrat dans les fluides de forage à base d'eau. On utilise préférentiellement le gellane natif qui a une qualité de gel intéressante et une bonne solubilité. Il faut noter que les quantités en poids de gellane natif utilisées dans les essais ci-après comprennent des débris cellulaires ou autres résidus, non solubles. Le taux réel de polysaccharide est d'environ 50% des quantités ajoutées.

Les essais ci-après vont montrer les caractéristiques du gellane natif en solution, dans des conditions permettant de comparer ses propriétés par rapport à d'autres produits utilisés dans la profession pour obtenir un résultat de même nature.

Une caractéristique dite de "volume filtré spécifique" et notée VFS a été calculée. Celle-ci représente la pente (a) de la loi de filtration en fonction du temps t (Volume filtré=a.t^{1/2}+b) divisée par la surface du filtre en cm². VFS a donc pour unité : ml/t^{1/2}/cm².

Les tests de filtration ont été exécutés selon les normes API en vigueur (API RP13 B1 section 3 -Filtration- Juin 1990), sauf dispositions contraires. Le volume filtré ou filtrat, mesuré en millilitre, après 30 minutes et 7,5 minutes est noté respectivement 30' et 7,5'. Les gels 0 et 10 (g0 et g10), qui caractérisent les propriétés thixotropiques du fluide, correspondent à des mesures effectués avec un viscosimètre du type Fann, normalisé par l'API, ainsi que les procédures utilisées. La viscosité plastique (VP) et la "yield value" (YV), qui caractérisent le comportement rhéologique des formulations, sont calculées à partir des mesures à 600 et 300 tours/min avec le même type de viscosimètre Fann. VP et YV sont exprimées conventionnellement respectivement en centipoise (mPa.s) et en lb/100ft² (4,8.10⁻⁶ bar). La caractéristique du cake est donnée par son épaisseur en millimètre.

Les salinités sont notées selon la convention suivante : par exemple, NalO signifie 10 g/litre de NaCl. Na5Ca5 signifie 5 g/litre de NaCl et 5 g/litre de CaCl₂.

Le gellane utilisé dans les essais suivants a été obtenu dans les conditions décrites dans le document US-A-4326052. Le gellane natif est utilisé pour tous les essais.

L'argile utilisée est de la Greenbond de la société CKS. La CMC utilisée a pour référence R110 fabriquée par la société AQUALON.

### ESSAIS

Le même mode de préparation des fluides d'essais, c'est-à-dire le mélange eau, argile, électrolyte et polymère, a été utilisé pour tous les essais. La procédure consiste notamment à ajouter les électrolytes après le gonflement de l'argile ou des polymères dans de l'eau distillée.

### Essai 1 : Influence de l'agitation sur la résistance au cisaillement du gellane.

La solution aqueuse comprend 1,5 g/l de gellane natif, 30 g/l d'argile Green Bond et 10 g/l de NaCl.

HB2, HB5 et HB20 représente respectivement l'agitation pendant 2, 5 et 20 minutes dans un agitateur du type Hamilton Beach. Les conditions d'homogénéisation à l'Hamilton Beach correspondent à la norme API section 11 OCMA grade bentonite (1970).

| | **VFS** | **30'** | **7,5'** | **g0** | **g10** |
|---|---|---|---|---|---|
| **HB2** | 0,0652 | 15,4 | 7,3 | 10,2 | 18 |
| **HB5** | 0,0639 | 15,2 | 7,2 | 10,0 | 19 |
| **HB20** | 0,0624 | 14,7 | 7,0 | 11,5 | 19 |
| **Shaker** | 0,0657 | 15,4 | 7,3 | 8,0 | 16 |
| **Agit.Magnét.** | 0,0708 | 16,9 | 7,6 | 9,0 | 15 |

La structure du gellane n'est pas modifiée par les conditions d'agitation.

### Essai 2 : Effets des sels à faible concentration sur le gellane.

La solution aqueuse comprend du gellane et 30 g/l d'argile Green Bond.
* Concentration en gellane : 0 g/l.

| **Salinité** | **Na0** | **Na5** | **Na10** |
|---|---|---|---|
| **VFS** | 0,091 | 0,135 | 0,145 |
| **30'** | 22,0 | 34,2 | 36,5 |
| **7,5'** | 11,3 | 17,0 | 18,0 |
| **g0** | 3,0 | 2,5 | 2,5 |
| **g10** | 3,0 | 2,5 | 8,0 |
| **Cake** | 2,0 | 2,5 | 2,75 |
| **VP** | 5 | 9,3 | 9,5 |
| **YV** | 1 | - | - |

* Concentration en gellane : 0,5 g/l.

| **Salinité** | **Na0** | **Na5** | **Na10** |
|---|---|---|---|
| **VFS** | 0,074 | 0,091 | 0,088 |
| **30'** | 18,0 | 21,8 | 22,3 |
| **7,5''** | 9,0 | 11,5 | 12,0 |
| **g0** | 1,5 | 6,0 | 7,0 |
| **g10** | 2,5 | 10,0 | 12,5 |
| **Cake** | 2,0 | 1,5 | 1,5 |
| **VP** | 9 | 6,5 | 5 |
| **YV** | 6 | 7,5 | 8,5 |

* Concentration en gellane : 1,5 g/l.

| **Salinité** | **Na0** | **Na5** | **Na10** |
|---|---|---|---|
| **VFS** | 0,065 | 0,063 | 0,067 |
| **30'** | 14,7 | 15,0 | 16,1 |
| **7,5'** | 6,9 | 7,2 | 7,7 |
| **g0** | 6,0 | 8,5 | 9,5 |
| **g10** | 11,0 | 12,5 | 11,5 |
| **Cake** | 1,5 | 1,5 | 1,5 |
| **VP** | 20 | 12,5 | 9 |
| **YV** | 12,5 | 17 | 17 |

* Concentration en gellane : 3 g/l.

| **Salinité** | **Na0** | **Na5** | **Na10** |
|---|---|---|---|
| **VFS** | 0,053 | 0,049 | 0,049 |
| **30'** | 12,0 | 11,3 | 11,9 |
| **7,5'** | 5,4 | 5,3 | 5,7 |
| **g0** | 12,0 | 23,0 | 25,0 |
| **g10** | 24,0 | 37,0 | 34,0 |
| **Cake** | 1,0 | 1,0 | 1,0 |
| **VP** | 27 | 20,5 | 16 |
| **YV** | 32 | 37,5 | 42 |

Remarques :
- Les formulations contenant du gellane sont homogènes et stables après plusieurs semaines.
- Le gellane permet de diminuer le volume de filtrat. Ces capacités sont indépendantes de la force ionique des formulations pour des salinités faibles.
- L'ajout de gellane permet de réduire significativement l'épaisseur du cake formé par filtration.
- Les fluides présentent un caractère thixotrope marqué qui augmente avec la salinité.

### Essai 3 : Effets des sels à fortes concentrations sur des formulations contenant du gellane.

La solution aqueuse comprend du gellane et 30 g/l d'argile Green Bond.
* Concentration en polymère : 0 g/l.

| **Salinité** | **Na50** | **Na5Ca5** |
|---|---|---|
| **VFS** | 0,366 | 0,379 |
| **30'** | 89,9 | 94,5 |
| **7,5'** | 44,5 | 47,5' |
| **g0** | 4,0 | 4,5 |
| **g10** | 7,0 | 3,5 |
| **Cake** | 5,0 | 5,0 |
| **VP** | 2,5 | 7,5 |
| **YV** | 5,5 | 3 |

* Concentration en gellane : 3 g/l.

| **Salinité** | **Na30** | **Na50** | **Na5Ca1** | **Na5Ca5** |
|---|---|---|---|---|
| **VFS** | 0,063 | 0,092 | 0,046 | 0,0745 |
| **30'** | 15,4 | 22,6 | 11,0 | 18,3 |
| **7,5'** | 7,55 | 11,3 | 5,2 | 9,1 |
| **g0** | 14,0 | 11,0 | 17,5 | 11,0 |
| **g10** | 16,0 | 13,0 | 25,0 | 14,0 |
| **Cake** | 1,0 | 1,5 | 1,0 | 1,0 |
| **VP** | 12 | 7,5 | 16,5 | 9 |
| **YV** | 23 | 17 | 31 | 22 |

* Concentration en gellane : 6,3 g/l.

| **Salinité** | **Na10** | **Na50** | **Na5Ca5** |
|---|---|---|---|
| **VFS** | 0,034 | 0,071 | 0,061 |
| **30'** | 8,1 | 16,5 | 15,0 |
| **7,5'** | 3,70 | 7,6 | 7,3 |
| **g0** | 47,0 | 21,0 | 31,0 |
| **g10** | 149,0 | 21,0 | 31,0 |
| **Cake** | 1,0 | 1,0 | 1,0 |
| **VP** | 30 | 12 | 25 |
| **YV** | 100 | 39 | 74 |

Remarque :
- A forte force ionique ou en présence de calcium, les volumes filtrés augmentent, mais le gain de filtration par rapport à un fluide sans polymère est important (70 à 80%).

### Essai 4 : Comparaison avec une formulation contenant de la CMC.

La solution aqueuse comprend 3 g/l de CMC et 30 g/l d'argile.

| **Salinité** | **Na0** | **Na5** | **Na10** | **Na50** | **Na5Ca5** |
|---|---|---|---|---|---|
| **VFS** | 0,059 | 0,052 | 0,053 | 0,096 | 0,178 |
| **30'** | 13,4 | 12,2 | 13,0 | 23,8 | 44,4 |
| **7,5'** | 6,4 | 5,8 | 6,6 | 12,0 | 22,4 |
| **g0** | 2,0 | 2,5 | 2,0 | 6,0 | 11,0 |
| **g10** | 2,0 | 6,0 | 7,0 | 12,0 | 14,0 |
| **Cake** | 1,0 | 1,0 | 1,5 | 2,0 | 3,0 |

Les résultats sont similaires à ce qui est obtenu avec le gellane. Le gellane est néanmoins moins sensible aux ions divalents et donne des fluides plus visqueux et plus thixotropes. De plus, les cakes formés avec du gellane sont plus fins qu'avec de la CMC aux fortes forces ioniques.

### Essai 5 : Influence de la température.

La solution aqueuse comprend 3 g/l de gellane, 10 g/l de NaCl et 30 g/l d'argile green Bond. La filtration est mesurée dans un filtre-presse HP-HT, par exemple fabriqué par la société Baroid. La surface du filtre est la moitié de celle du filtre-presse API. La pression différentielle de test est de 35 bar avec une contre-pression de 15 bar.

| **Température** | **30** | **50** | **70** | **90** | **110** |
|---|---|---|---|---|---|
| **VFS** | 0,053 | 0,056 | 0,075 | 0,086 | 0,094 |
| **30'** | 6,6 | 7,2 | 9,2 | 11,9 | 12,8 |
| **7,5'** | 3,3 | 3,6 | 4,5 | 6,3 | 6,8 |
| **Cake** | 1,0 | 1,0 | 1,0 | 1,0 | 1,0 |

Remarques :
- Le volume de filtrat est indépendant de la pression différentielle appliquée.
- Le VFS augmente avec la température mais reste faible même à 110°C.

Les essais suivants n'ont pas été fait en présence d'argile.

### Essai 6 : Solution sans argile, gellane seul, avec scléroglucane ou xanthane ou wellane.

* Gellane seul, concentration en NaCl : 10 g/l.

| **Gellane** | **1,5** | **3,0** | **5,0** |
|---|---|---|---|
| **VFS** | 0,16 | 0,131 | 0,11 |
| **30'** | 43,0 | 30,0 | 24,0 |
| **7,5'** | 21,5 | 12,0 | 9,5 |
| **g0** | 1,0 | 4,0 | 9,0 |
| **g10** | 1,0 | 5,0 | 10,0 |
| **Cake** | 0,5 | 0,5 | 1,0 |
| **VP** | 3,5 | 6 | 14 |
| **YV** | 3 | 8 | 26 |

* Concentration en scléroglucane : 4,5 g/l, NaCl 10 g/l.

| **Gellane** | **0** | **1,5** | **3,0** | **5,0** |
|---|---|---|---|---|
| **VFS** | 0,113 | 0,071 | 0,061 | 0,066 |
| **30'** | 165,0 | 19,7 | 13,7 | 14,9 |
| **7,5'** | 151,0 | 10,7 | 5,5 | 6,4 |
| **g0** | 16,0 | 19,0 | 25,0 | 38,0 |
| **g10** | 19,0 | 24,0 | 31,0 | 46,0 |
| **Cake** | 0,25 | 0,75 | 1,0 | 1,0 |
| **VP** | 4 | 6 | 8 | 12 |
| **YV** | 18 | 24 | 39 | 55 |

* Concentration en wellane : 3 g/l, NaCl 10 g/l.

| **Gellane** | **0** | **1,5** | **3,0** | **5,0** |
|---|---|---|---|---|
| **VFS** | 0,097 | 0,100 | 0,099 | 0,080 |
| **30'** | 38,0 | 25,1 | 22,2 | 17,3 |
| **7,5'** | 23,8 | 11,6 | 9,0 | 6,6 |
| **g0** | 6,0 | 9,0 | 15,0 | 30,0 |
| **g10** | 6,0 | 10,0 | 21,0 | 35,0 |
| **Cake** | 0,25 | 0,5 | 0,75 | 0,75 |
| **VP** | 6,5 | 7 | 16 | 21 |
| **YV** | 8 | 19 | 28 | 63 |

* Concentration en xanthane : 3 g/l.

| **Gellane** | **0** | **1,5** | **3,0** | **5,0** |
|---|---|---|---|---|
| **VFS** | infini | 0,096 | 0,088 | 0,080 |
| **30'** | | 24,3 | 21,5 | 18,1 |
| **7,5'** | | 7,5' | 9,9 | 11,3 |
| **g0** | 6,0 | 10,0 | 16,0 | 20,0 |
| **g10** | 8,0 | 13,0 | 18,0 | 29,0 |
| **Cake** | | 0,5 | 1,0 | 1,0 |
| **VP** | 4 | 6 | 9 | 13 |
| **YV** | 11 | 19 | 32 | 55 |

Remarques :
- Les fluides contenant du gellane et un agent viscosifiant donnent des VFS comparables à ce qui a été obtenu avec argile.
- Les cakes formés sont minces et homogènes.
- Les solutions obtenues sont thixotropes.
- L'adjonction de gellane permet la formation d'un cake sans perte initiale de filtrat.

### Essai 7 : Solution sans argile, gellane avec scléroglucanne.

* Concentration en gellane : 3 g/l, NaCl 10 g/l.

| **Sclérogulcane** | **0** | **3,0** | **4,5** | **6,0** |
|---|---|---|---|---|
| **VFS** | 0,141 | 0,078 | 0,060 | 0,060 |
| **30'** | 33,3 | 18,7 | 12,2 | 14,7 |
| **7,5'** | 15,35 | 8,6 | 6,9 | 6,4 |
| **g0** | 5,0 | 20,0 | 27,0 | 34,0 |
| **g10** | 9,0 | 24,0 | 36,0 | 42,0 |
| **Cake** | 0,5 | 0,5 | 0,5 | 0,25 |
| **VP** | 9 | 10 | 12 | 12 |
| **YV** | 11 | 29 | 35 | 46 |

Le VFS diminue avec la concentration en scléroglucane et reste constant à partir de 4,5 g/l.

### Essai 8 : Solution sans argile, Influence de la salinité.

La solution aqueuse comporte 3 g/l de gellane et 4,5 g/l de scléroglucane.

| **Salinité** | **Na0** | **Na5** | **Na10** | **Na30** |
|---|---|---|---|---|
| **VFS** | 0,087 | 0,066 | 0,056 | 0,058 |
| **30'** | 29,8 | 20,9 | 12,7 | 13,6 |
| **7,5'** | 19,1 | 12,3 | 5,2 | 6,0 |
| **g0** | 37,0 | 26,0 | 24,0 | 24,0 |
| **g10** | 54,0 | 31,0 | 29,0 | 29,0 |
| **Cake** | 1,0 | 0,5 | 0,5 | 0,5 |
| **VP** | 21 | 13 | 13 | 11 |
| **YV** | 55 | 40 | 35 | 39 |

| **Salinité** | **Na50** | **Na5Ca1** | **Na5Ca5** |
|---|---|---|---|
| **VFS** | 0,056 | 0,061 | 0,056 |
| **30'** | 13,2 | 13,8 | 12,6 |
| **7,5'** | 5,9 | 6,9 | 5,2 |
| **g0** | 23,0 | 25,0 | 25,0 |
| **g10** | 29,0 | 31,0 | 29,0 |
| **Cake** | 0,75 | 1,0 | 0,5 |
| **VP** | 12 | 12 | 12 |
| **YV** | 36 | 42 | 42 |

Remarques :
- A faible salinité (<=5 g/l de NaCl), le cake se forme avec du retard.
- A forte salinité ou en présence de calcium, aucun "spurt loss" n'est observé et le VFS et la thixotropie sont indépendants de la salinité des solutions. On peut définir le "spurt loss" comme étant le volume de fluide filtré dans la formation avant la formation d'un cake suffisamment imperméable.

### Essai 9 : Influence de la température sur une solution sans argile de gellane et scléroglucane, à différentes salinités.

Les conditions d'essais sont identiques à celles de l'essai 5.
* La solution aqueuse comprend 3 g/l de gellane, 4,5 g/l de scléroglucane et 10 g/l de NaCl.

| **Température** | **30** | **50** | **70** | **90** | **110** |
|---|---|---|---|---|---|
| **VFS** | 0,104 | 0,120 | 0,143 | 0,204 | infini |
| **30'** | 10,2 | 13,5 | 14,0 | 47,0 | |
| **7,5'** | 4,2 | 7,3 | 6,7 | 36,4 | |
| **g0** | 22,0 | | | | |
| **g10** | 31,0 | | | | |
| **Cake** | 1,0 | 1,5 | 1,0 | 1,0 | |
| **VP** | 12 | | | | |
| **YV** | 39 | | | | |

* La solution aqueuse comprend 3 g/l de gellane, 4,5 g/l de scléroglucane, 5 g/l de NaCl et 5 g/l de CaCl₂

| **Température** | **30** | **50** | **70** | **90** | **110** |
|---|---|---|---|---|---|
| **VFS** | 0,083 | 0,125 | 0,142 | 0,171 | infini |
| **30'** | 8,2 | 12,2 | 14,4 | 21,3 | |
| **7,5'** | 3,2 | 5,2 | 6,7 | 2,7 | |
| **g0** | 22,0 | | | | |
| **g10** | 27,0 | | | | |
| **Cake** | 1,0 | 1,0 | 1,0 | 1,0 | 1,0 |
| **VP** | 11 | | | | |
| **YV** | 36 | | | | |

* La solution aqueuse comprend 3 g/l de gellane, 4,5 g/l de scléroglucane, 5 g/l de NaCl et 5 g/l de FeCl₃.

| **Température** | **30** | **90** | **100** | **110** |
|---|---|---|---|---|
| **VFS** | 0,066 | 0,143 | 0,157 | infini |
| **30'** | 11,9 | 18,7 | 30,6 | |
| **7,5'** | 5,3 | 8,7 | 19,0 | |
| **g0** | 12,0 | | | |
| **g10** | 17,0 | | | |
| **Cake** | 1,0 | 1,0 | 1,0 | |
| **VP** | 7 | | | |
| **YK** | 18 | | | |

Remarques :
- Le VFS augmente avec la température de filtration.
- Le VFS diminue lorsque l'on passe de l'ion monovalent au divalent puis au trivalent.
- Un phénomène de "spurt loss" est observé à 90°C pour les formulations contenant des ions mono et divalents et à 110°C aucun cake ne se forme.
- Avec les ions trivalents, un "spurt loss" est observé à 100°C et aucun cake ne se forme à 110°C.

### Essai 10 : Influence de la température sur une solution sans argile de gellane et scléroglucane en présence de forte concentration de CaCl₂ ou K₂CO₃.

* La solution aqueuse comprend 3 g/l de gellane, 4,5 g/l de scléroglucane et 50 g/l de CaCl₂.

| **Température** | **30** | **50** | **70** | **90** | **100** | **115** | **130** |
|---|---|---|---|---|---|---|---|
| **VFS** | 0,084 | 0,114 | 0,141 | 0,162 | 0,169 | 0,171 | infini |
| **30**' | 9,4 | 12,9 | 16,6 | 19,8 | 20,2 | 24,9 | |
| **7,5**'' | 3,7 | 5,8 | 8,0 | 9,8 | 9,8 | 14,5 | |
| **g0** | 8,0 | | | | | | |
| **g10** | 12,0 | | | | | | |
| **Cake** | 0,75 | 0,75 | 1,0 | 1,0 | 0,5 | 0,75 | |
| **VP** | 7 | | | | | | |
| **YV** | 12 | | | | | | |

* La solution aqueuse comprend 3 g/l de gellane, 4,5 g/l de scléroglucane et 50 g/l de K₂CO₃.

| **Température** | **30** | **50** | **70** | **90** | **100** | **115** | **130** |
|---|---|---|---|---|---|---|---|
| **VFS** | 0,081 | 0,108 | 0,122 | 0,168 | 0,184 | 0,238 | infini |
| **30'** | 9,1 | 12,0 | 14,1 | 21,5 | 23,4 | 52,2 | |
| **7,5''** | 3,7 | 5,5 | 6,3 | 11,1 | 11,5 | 36,1 | |
| **g0** | 17,0 | | | | | | |
| **g10** | 24,0 | | | | | | |
| **Cake** | 0,5 | 0,5 | 0,5 | 0,5 | 0,5 | 0,5 | |
| **VP** | 19 | | | | | | |
| **YV** | 20 | | | | | | |

En présence d'une forte concentration en sel, un "spurt loss" est observé à partir de 115°C et aucun cake ne se forme à 130°C.

### Essai 11 : Influence de la température sur une solution sans argile de gellane avec du xanthane ou du wellane en présence d'une forte concentration de CaCl₂.

* La solution aqueuse comprend 3 g/l de gellane, 4,5 g/l de xanthane et 50 g/l de CaCl₂.

| **Température** | **30** | **90** | **110** | **130** | **150** |
|---|---|---|---|---|---|
| **VFS** | 0,071 | 0,139 | 0,177 | 0,201 | infini |
| **30'** | 7,8 | 16,1 | 22,4 | 109,0 | |
| **7,5'** | 3,0 | 7,9 | 11,3 | 97,0 | |
| **g0** | 18,0 | | | | |
| **g10** | 22,0 | | | | |
| **Cake** | 0,5 | 1,0 | 1,0 | 0,5 | |
| **VP** | 12 | | | | |
| **YV** | 36 | | | | |

* La solution aqueuse comprend 3 g/l de gellane, 4,5 g/l de wellane et 50 g/l de CaCl₂.

| **Température** | **30** | **90** | **110** | **130** | **150** |
|---|---|---|---|---|---|
| **VFS** | 0,085 | 0,154 | 0,159 | 0,185 | 0,289 |
| **30'** | 9,6 | 17,8 | 18,6 | 24,2 | 46,8 |
| **7,5'** | 3,7 | 8,4 | 8,8 | 12,5 | 24,2 |
| **g0** | 10,0 | | | | |
| **g10** | 22,0 | | | | |
| **Cake** | 0,5 | 1,0 | 1,0 | 0,5 | 0,5 |
| **VP** | 22 | | | | |
| **YV** | 37 | | | | |

Remarques :
- Le phénomène de "spurt loss" est observé à des températures plus élevées qu'avec le scléroglucane, à 130°C avec le xanthane et 150°C avec le wellane. A 130°C, aucun cake ne se forme avec le xanthane.
- A 30°C, ces formulations montrent un caractère rhéofluidifiant marqué.

### Essai 12 :

Ces essais complémentaires ont été exécutés avec du gellane commercial clarifié et désestérifié (Gelrite).

La solution aqueuse comporte 20 g/l d'argile et 2 g/l de Gelrite qui a été solubilisé par l'ajout d'un séquestrant du type EDTA ou éthylène diamine tétraammonium.

Dans une solution sans sel, le filtrat 30' est de 15 ml à température ambiante.

Dans une solution saline, telle de l'eau de mer, le filtrat 30' atteint la valeur de 275 ml.

Le Gelrite a des capacités beaucoup moins importantes que le gellane natif en raison notamment de sa grande sensibilité aux sels.

## Revendications

1. Utilisation du gellane natif dans un fluide à base d'eau en circulation dans un puits foré à travers au moins une formation géologique ayant une certaine perméabilité, en tant que réducteur de filtrat.

2. Utilisation selon la revendication 1, dans laquelle ledit fluide comporte entre 0,5 et 10 grammes par litre de gellane natif, et préférentiellement moins de 5 g/litre.

3. Utilisation selon l'une des revendications précédentes, dans laquelle la viscosité dudit fluide est principalement contrôlée par l'adjonction d'une quantité suffisante d'au moins un autre polymère.

4. Utilisation selon la revendication 3, dans laquelle ledit autre polymère est choisi dans le groupe constitué par le xanthane, le scléroglucane, le wellane, la cellulose hydroxy éthylée (HEC), la CMC, la gomme de Guar et les polyacrylamides.

## Patentansprüche

1. Verwendung von nativem Gellan in einer Flüssigkeit (Fluid) auf Wasserbasis, die in einem Bohrloch zirkuliert, das durch eine geologische Formation mit einer bestimmten Permeabilität gebohrt worden ist, als Filtrat-Reduktionsmittel.

2. Verwendung nach Anspruch 1, bei der die genannte Flüssigkeit (Fluid) 0,5 bis 10 g/l natives Gellan und vorzugsweise weniger als 5 g/l natives Gellan enthält.

3. Verwendung nach einem der vorhergehenden Ansprüche, bei der die Viskosität der (des) genannten Flüssigkeit (Fluids) hauptsächlich kontrolliert wird durch Zugabe einer ausreichenden Menge mindestens eines weiteren Polymers.

4. Verwendung nach Anspruch 3, bei der das genannte weitere Polymer ausgewählt wird aus der Gruppe, die besteht aus Xanthan, Scleroglucan, Wellan, Hydroxyethylcellulose (HEC), CMC, Guar-Gummi und Polyacrylamiden.

## Claims

1. Use of native gellan in a water-based fluid in circulation in a well drilled through at least one geological formation having a certain permeability as filtrate reducer.

2. Use according to claim 1, in which said fluid comprises between 0.5 and 10 grams per litre of native gellan, and preferably less than 5 g/litre.

3. Use according to one of the preceding claims, in which the viscosity of said fluid is mainly controlled by the addition of a sufficient quantity of at least one other polymer.

4. Use according to claim 3, in which said other polymer is selected from the group constituted by xanthan, scleroglucan, wellan, ethyl hydroxy cellulose (HEC), CMC, guar gum and polyacrylamides.
